# EUROPEAN PATENT APPLICATION

(11) **EP 4 418 727 A1**
(43) Date of publication of application: **21.08.2024**
(21) Application number: 22892157.3
(22) Date of filing: 15.11.2022
(51) Int. Cl.: H04W 28/02

(54) **INFORMATION PROCESSING METHOD AND APPARATUS, AND DEVICE AND READABLE STORAGE MEDIUM**

(30) Priority: 15.11.2021 CN 202111350371
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100032 (CN); HU, Nan, Beijing 100032 (CN)
(74) Representative: J A Kemp LLP
(86) International application number: PCT/CN2022/131851
(87) International publication number: WO 2023/083364

(57) **Abstract**

The embodiments of the present disclosure provide an information processing method and apparatus, and a device and a readable storage medium. The method comprises: a terminal acquiring resource information and/or protocol stack configuration information corresponding to the level of first data; and the terminal sending and/or receiving the first data according to the resource information and/or the protocol stack configuration information corresponding to the level of the first data.

## Description

### CROSS-REFERENCE TO RELATED APPLICATION

This application claims priority of Chinese patent application No. 202111350371.9 filed on November 15, 2021, the disclosure of which is incorporated herein by reference in its entirety.

### TECHNICAL FIELD

Embodiments of the disclosure relates to the technical field of communications, and in particular to a method and apparatus, and device for information processing, and a readable storage medium.

### BACKGROUND

Ultra-reliable and low-latency communication (URLLC) mainly includes following scenarios and applications: industrial application and control, traffic security and control, remote manufacturing, remote training, telesurgery, and the like. URLLC has great potential in the aspect of unmanned driving services. Moreover, URLLC is also very important to the security and protection industry. Industrial automatic control requires a delay of about 10 ms, which is hard to achieve in the 4th Generation (4G) age. In unmanned driving, the requirement in time delay is higher. The transmission delay needs to be lowered to 1 ms, and the requirement on security and reliability is also very high.

How to enable data processing to satisfy the quality of service (QoS) demand of a specific service is a problem to be solved urgently.

### SUMMARY

Embodiments of the disclosure provide a method, apparatus, and device for information processing, and a readable storage medium, to solve the problem of how to enable data processing to satisfy a QoS demand of a specific service.

In a first aspect, provided is a method for information processing. The method includes that: a terminal acquires at least one of resource information or protocol stack configuration information corresponding to a level of first data; and the terminal sends and/or receives the first data according to the at least one of the resource information or the protocol stack configuration information corresponding to the level of the first data.

Optionally, before the terminal acquires the resource information and/or the protocol stack configuration information corresponding to the level of the first data, the method further includes that the terminal acquires first indication information. The first indication information indicates 1^{st} to m^{th} levels of data of at least one of following: a first service, a first quality of service (QoS) flow, a first protocol data unit (PDU) session, a first stream, or a first logical channel. The first indication information further indicates at least one of resource information or protocol stack configuration information for each of the 1^{st} to m^{th} levels; where m is a natural number greater than or equal to 1.

Optionally, the protocol stack configuration information includes at least one of following: radio bearer configuration information, service data adaptation protocol (SDAP) configuration information, packet data convergence protocol (PDCP) configuration information, radio link control (RLC) configuration information, media access control (MAC) configuration information, physical layer configuration information, adaptation layer configuration information, logical channel configuration information, configured grant configuration information, discontinuous reception (DRX) configuration information, semi-persistent scheduling (SPS) configuration information, random access configuration information, scheduling request (SR) configuration information, buffer status report (BSR) configuration information, protocol stack configuration information of second downlink data corresponding to first data, or protocol stack configuration information of third uplink data corresponding to the first data.

Optionally, before, after or at the same time of the terminal acquires the at least one of the resource information or the protocol stack configuration information corresponding to the level of the first data, the method further includes that: the terminal determines a level of first data. The first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel. 1^{st} to m^{th} levels are configured for the first service, the first QoS flow, the first PDU session, the first stream, or the first logical channel, m being a natural number greater than or equal to 1.

Optionally, the operation that the terminal determines the level of the first data includes that, the terminal determines the level of the first data according to a frame type of the first data; or the terminal determines the level of the first data according to a frame type parsing capability of a non-access stratum (NAS), an Internet protocol (IP) layer, or a PDCP layer; or a higher layer above the PDCP layer of the terminal indicates the level of the first data to an access stratum (AS) of the terminal.

Optionally, resource information corresponding to the level of the first data includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection. The HARQ progress information includes at least one of following: a number of HARQ progresses, an HARQ progress ID, whether an HARQ progress supports HARQ feedback, whether an HARQ progress supports retransmission scheduling, and an HARQ codebook type.

Optionally, the frame type includes any one of: an I frame, a P frame, or a B frame.

Optionally, the operation that the terminal sends the first data according to the resource information corresponding to the level of the first data includes: when the level of the first data corresponds to an I frame, the terminal sends the first data through a combination of multiple beams; or when the level of the first data corresponds to a P frame or a B frame, the terminal sends the first data through a single beam.

Optionally, the method further includes: the terminal sends at least one of a level of the first data or assistance information to the network device. The assistance information includes at least one of following: a frame rate, a delay, or a priority of a packet; and/or granularity of the assistance information is at least one of following: assistance information corresponding to the first data, assistance information corresponding to a first PDU session corresponding to the first data, assistance information corresponding to a first radio bearer corresponding to the first data, assistance information corresponding to a first logical channel corresponding to the first data, assistance information corresponding to a quality of service (QoS) flow corresponding to the first data; assistance information corresponding to a stream corresponding to the first data, or assistance information corresponding to a service corresponding to the first data.

Optionally, the method further includes: the terminal sends first information to the network device. The first information indicates that 1^{st} to b^{th} QoS flows belong to a service, b being a natural number greater than or equal to 1; or the first information indicates that a QoS flow has 1^{st} to q^{th} 5th-generation QoS identifiers (5QIs), q being a natural number greater than or equal to 1.

Optionally, the method further includes: the terminal receives second information from the network device. The second information indicates at least one of following: 1^{st} to b^{th} QoS flows are mapped to one radio bearer; the 1^{st} to b^{th} QoS flows are mapped to 1^{st} to c^{th} radio bearers; or a QoS flow having 1^{st} to q^{th} 5QIs is mapped to 1^{st} to d^{th} radio bearers. b, c, q and d are all natural numbers greater than or equal to 1.

Optionally, in a case that the second information indicates that the QoS flow having the 1^{st} to q^{th} 5QIs is mapped to the 1^{st} to d^{th} radio bearers, 1^{st} to q^{th} general packet radio service (GPRS) tunnelling protocol for the user plane (GPT-U) tunnels between a network side and a core network are established through the QoS flow having the 1^{st} to q^{th} 5QIs; or 1^{st} to q^{th} PDU sessions between a terminal and the core network are established through the QoS flow having the 1^{st} to q^{th} 5QIs; or a GPT-U tunnel between a network side and a core network is established through the QoS flow having the 1^{st} to q^{th} 5QIs; or a PDU session between the terminal and the core network is established through the QoS flow having the 1^{st} to q^{th} 5QIs.

In a second aspect, provided is method for information processing. The method includes: a network device sends first information. The first indication information indicates 1^{st} to m^{th} levels of data of at least one of following: a first service, a first quality of service (QoS) flow, a first protocol data unit (PDU) session, a first stream, or a first logical channel. The first indication information further indicates at least one of resource information or protocol stack configuration information for each of the 1^{st} to m^{th} levels; where m is a natural number greater than or equal to 1.

Optionally, the method further includes: the network device receives and/or sends first data according to at least one of resource information or protocol stack configuration information corresponding to a level of the first data.

Optionally, the protocol stack configuration information includes at least one of following: radio bearer configuration information, service data adaptation protocol (SDAP) configuration information, packet data convergence protocol (PDCP) configuration information, radio link control (RLC) configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

Optionally, the first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel. 1^{st} to m^{th} levels are configured in the first service, the first QoS flow, the first PDU session, the first stream, or the first logical channel, m being a natural number greater than or equal to 1.

Optionally, resource information corresponding to the level of the first data includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection. The HARQ progress information includes at least one of following: a number of HARQ progresses, an HARQ progress ID, whether an HARQ progress supports HARQ feedback, whether an HARQ progress supports retransmission scheduling, and an HARQ codebook type.

Optionally, the level indicates a frame type of the first data, and the frame type includes any one of: an I frame, a P frame, or a B frame.

Optionally, the operation that the network device receives the first data according to the at least one of the resource information or the protocol stack configuration information corresponding to the level of the first data includes: when the level of the first data corresponds to an I frame, the network device receives the first data through a combination of multiple beams; or when the level of the first data corresponds to a P frame or a B frame, the network device receives the first data through a single beam.

Optionally, before the network device sends the first indication information, the method further includes: the network device acquires at least one of a level of the first data or assistance information from a core network or a terminal. The assistance information includes at least one of following: a frame rate, a delay, or a priority of a packet; and/or granularity of the assistance information is at least one of following: assistance information corresponding to the first data, assistance information corresponding to a first PDU session corresponding to the first data, assistance information corresponding to a first radio bearer corresponding to the first data, assistance information corresponding to a first logical channel corresponding to the first data, assistance information corresponding to a QoS flow corresponding to the first data, assistance information corresponding to a stream corresponding to the first data, or assistance information corresponding to a service corresponding to the first data.

Optionally, before the network device sends the first indication information, the method further includes: the network device acquires 5th-generation QoS identifier (5QI) information from a core network. The 5QI information includes at least one of following: a frame rate; a delay; a jitter; an error rate; a priority of a packet; far, intermediate and near visual field identifiers; precision information indicating a visual field identifier; or an error concave or correct concave; and/or granularity of the 5QI information is at least one of following: 5QI information corresponding to a QoS flow corresponding to the first data, 5QI information corresponding to a stream corresponding to the first data, or 5QI information corresponding to the first data.

Optionally, the method further includes: the network device acquires first information. The first information indicates that 1^{st} to b^{th} QoS flows belong to a service, b being a natural number greater than or equal to 1; or the first information indicates that a QoS flow has 1^{st} to q^{th} 5th-generation QoS identifiers (5QIs), q being a natural number greater than or equal to 1.

Optionally, the operation that the network device acquires the first information includes: the network device acquires the first information from at least one of a core network, a terminal, an artificial intelligence (AI) control function, or a network management.

Optionally, the method further includes: the network device sends second information to a terminal. The second information indicates at least one of following: 1^{st} to b^{th} QoS flows are mapped to one radio bearer, the 1^{st} to b^{th} QoS flows are mapped to 1^{st} to c^{th} radio bearers, or a QoS flow having 1^{st} to q^{th} 5QIs is mapped to 1^{st} to d^{th} radio bearers, c is a natural number greater than or equal to 1, q is a natural number greater than or equal to 1 and d is a natural number greater than or equal to 1.

Optionally, in a case that the second information indicates that the QoS flow having the 1^{st} to q^{th} 5QIs is mapped to the 1^{st} to d^{th} radio bearers, 1^{st} to q^{th} general packet radio service (GPRS) tunnelling protocol for the user plane (GPT-U) tunnels between a network side and a core network are established through the QoS flow having the 1^{st} to q^{th} 5QIs; or 1^{st} to q^{th} PDU sessions between a terminal and the core network are established through the QoS flow having the 1^{st} to q^{th} 5QIs; or a GPT-U tunnel between a network side and a core network is established through the QoS flow having the 1^{st} to q^{th} 5QIs; or a PDU session between the terminal and the core network is established through the QoS flow having the 1^{st} to q^{th} 5QIs.

In a third aspect, provided is method for information processing. The method includes at least one of following: a terminal sends information of a data set to a network device; or the terminal processes data in the data set according to the information of the data set. The information of the data set is at least one of following cases: the information of the data set is used for indicating that the data set is composed of 1^{st} to k^{th} data, k being a natural number greater than or equal to 1; the information of the data set is used for indicating that a data is a first packet in the data set; the information of the data set is used for indicating that a data is a last packet in the data set; the information of the data set is used for indicating that a data is a middle packet in the data set; the information of the data set is used for indicating that a data is a first packet in the data set and that there are r packets following the first packet, r being a natural number greater than or equal to 1; the information of the data set is used for indicating that a data is a last packet in the data set and that another data set immediately previous to the data set includes n packets, n being a natural number greater than or equal to 1; the information of the data set is used for indicating that a data is a u^{th} packet in the data set, u being a natural number greater than or equal to 1; the information of the data set is used for indicating a level of the data set; the information of the data set is used for indicating a level of each packet in the data set; or the information of the data set is used for indicating characteristic information of the data set. The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

Optionally, in a case that the terminal sends the information of the data set to the network device, the information of the data set is carried by a packet header of data; or the information of the data set is carried by a payload of data; or the information of the data set is carried by control signaling of at least one of: a radio resource control (RRC) layer, a packet data convergence protocol (PDCP) layer, a control signaling radio link control (RLC) layer or a media access control (MAC) layer; or the information of the data set is added to buffer status report (BSR) signaling; or the information of the data set is added to scheduling request (SR) signaling.

Optionally, in a case that the terminal sends the information of the data set to the network device, multiple data in the data set form a same picture, to assist information scheduling of the network device by using the data set.

Optionally, in a case that the terminal sends the information of the data set to the network device, multiple data in the data set are used to accomplish a same task, to assist information scheduling of the network device by using the data set.

Optionally, in a case that the terminal sends the information of the data set to the network device, the method further includes: the terminal receives at least one of following from the network device: resource configuration or resource scheduling information for the data set.

Optionally, resource information corresponding to the data set includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection. The HARQ progress information includes at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

Optionally, the protocol stack configuration information of the data set includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

Optionally, in a case that the terminal processes the data in the data set according to the information of the data set, the operation that the terminal processes the data in the data set according to the information of the data set includes at least one of following: the terminal selects a radio resource according to the information of the data set; the terminal multiplexes the data in the data set in one or more MAC packet data units (PDUs) preferentially; the terminal sends the data in the data set using multiple parallel HARQ progresses; the terminal sends the data in the data set using multiple configured grant resources; the terminal multiplexes retransmission of a data in the data set and new transmission of another piece of data in the data set in one or more MAC packet data units (PDUs) preferentially; the terminal performs a data recovery operation on 1^{st} to k1^{th} data in the data set together; the terminal sets and/or starts a discard timer for 1^{st} to k2^{th} data in the data set; the terminal sends a PDCP status report, a field of a bitmap in the PDCP status report is used for indicating a receiving state of the data set; the terminal discards 1^{st} to k3^{th} data in the data set in response to that a discard timer corresponding to any of the 1^{st} to the k3^{th} data in the data set expires; or the terminal delivers one or more RLC service data units (SDUs) corresponding the 1^{st} to k4^{th} data in the data set in response to that an RLC layer receives all of the 1^{st} to the k4^{th} data in the data set from a lower layer. k1, k2, k3 and k4 are natural numbers greater than or equal to 1.

In a fourth aspect, provided is a method for information processing. The method includes: a network device receives information of a data set from a terminal. The information of the data set is at least one of following cases: the information of the data set is used for indicating that the data set is composed of 1^{st} to k^{th} data, k being a natural number greater than or equal to 1; the information of the data set is used for indicating that a data is a first packet in the data set; the information of the data set is used for indicating that a data is a last packet in the data set; the information of the data set is used for indicating that a data is a middle packet in the data set; the information of the data set is used for indicating that a data is a first packet in the data set and that there are r packets following the first packet, r being a natural number greater than or equal to 1; the information of the data set is used for indicating that a data is a last packet in the data set and that another data set immediately previous to the data set includes n packets, n being a natural number greater than or equal to 1; the information of the data set is used for indicating that a data is a u^{th} packet in the data set, u being a natural number greater than or equal to 1; the information of the data set is used for indicating a level of the data set; the information of the data set is used for indicating a level of each packet in the data set; or the information of the data set is used for indicating characteristic information of the data set. The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

Optionally, the information of the data set is carried by a packet header of data; or the information of the data set is carried by a payload of data; or the information of the data set is carried by control signaling of at least one of: a radio resource control (RRC) layer, a packet data convergence protocol (PDCP) layer, a control signaling radio link control (RLC) layer or a media access control (MAC) layer; or the information of the data set is added to buffer status report (BSR) signaling; or the information of the data set is added to scheduling request (SR) signaling.

Optionally, multiple data in the data set form a same picture, to assist information scheduling of the network device by using the data set; or multiple data in the data set are used to accomplish a same task, to assist information scheduling of the network device by using the data set.

Optionally, the method further includes: the network device sends at least one of following to the terminal: resource configuration or resource scheduling information for the data set.

Optionally, resource information corresponding to the data set includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection. The HARQ progress information includes at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

Optionally, the protocol stack configuration information of the data set includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In a fifth aspect, provided is an apparatus for information processing. The apparatus is applied to a terminal, and includes a first acquisition module and a transceiving module. The first acquisition module is configured to acquire resource information and/or protocol stack configuration information corresponding to a level of first data. The transceiving module is configured to send and/or receive the first data through the resource information and/or the protocol stack configuration information corresponding to the level of the first data.

In a sixth aspect, provided is an apparatus for information processing. The apparatus is applied to a network device and includes a first sending module. The first sending module is configured to send first indication information. The first indication information indicates 1^{st} to m^{th} levels of data of at least one of following: a first service, a first quality of service (QoS) flow, a first protocol data unit (PDU) session, a first stream, or a first logical channel. The first indication information further indicates resource information and/or protocol stack configuration information corresponding to each of the 1^{st} to m^{th} levels. m is a natural number greater than or equal to 1.

In a seventh aspect, provided is an apparatus for information processing. The apparatus is applied to a terminal , and includes a first processing module. The first processing module is configured to perform at least one of following: sending information of a data set to a network device; or processing data in the data set according to the information of the data set. The information of the data set is at least one of following cases: the information of the data set is used for indicating that the data set is composed of 1^{st} to k^{th} data, k being a natural number greater than or equal to 1; the information of the data set is used for indicating that a data is a first packet in the data set; the information of the data set is used for indicating that a data is a last packet in the data set; the information of the data set is used for indicating that a data is a middle packet in the data set; the information of the data set is used for indicating that a data is a first packet in the data set and that there are y packets following the first data packet, y being a natural number greater than or equal to 1; the information of the data set is used for indicating that a data is a last packet in the data set and that another data set immediately previous to the data set includes n packets, n being a natural number greater than or equal to 1; the information of the data set is used for indicating that a data is a u^{th} packet in the data set, u being a natural number greater than or equal to 1; the information of the data set is used for indicating a level of the data set; the information of the data set is used for indicating a level of each packet in the data set; or the information of the data set is used for indicating characteristic information of the data set. The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

In an eighth aspect, provided is an apparatus for information processing. The apparatus is applied to a network device and includes a second receiving module. The second receiving module is configured to receive information of a data set from a terminal. The information of the data set is at least one of following cases: the information of the data set is used for indicating that the data set is composed of 1^{st} to k^{th} data, k being a natural number greater than or equal to 1; the information of the data set is used for indicating that a data is a first packet in the data set; the information of the data set is used for indicating that a data is a last packet in the data set; the information of the data set is used for indicating that a data is a middle packet in the data set; the information of the data set is used for indicating that a data is a first packet in the data set and that there are y packets following the first data packet, y being a natural number greater than or equal to 1; the information of the data set is used for indicating that a data is a last packet in the data set and that another data set immediately previous to the data set includes n packets, n being a natural number greater than or equal to 1; the information of the data set is used for indicating that a data is a u^{th} packet in the data set, u being a natural number greater than or equal to 1; the information of the data set is used for indicating a level of the data set; the information of the data set is used for indicating a level of each packet in the data set; or the information of the data set is used for indicating characteristic information of the data set. The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

In a ninth aspect, provided is a communication device, including a processor, a memory, and a program that is stored in the memory and is capable of running in the processor. The program implements, when executed by the processor, the steps of the method of the first aspect, the second aspect, the third aspect or a fourth aspect.

In a tenth aspect, provided is a readable storage medium stored with a program that, when executed by a processor, implements the steps of the method of the first aspect, the second aspect, the third aspect or a fourth aspect.

In the embodiments of the disclosure, differentiated processing of different levels of data of a same service enables the data processing to better satisfy the QoS demand of a specific service.

### BRIEF DESCRIPTION OF THE DRAWINGS

Through reading the following detailed description of the preferred embodiments, various other advantages and benefits would become clear to those of ordinary skill in the art. The accompanying drawings are merely for the purpose of illustrating the preferred embodiments, and should not be construed limiting of the disclosure. Moreover, in the drawings, similar reference signs represent the same components. In the drawings:
FIG. 1 illustrates a block diagram of a wireless communication system applicable to embodiments of the disclosure.
FIG. 2 illustrates a first schematic diagram of a method for information processing according to embodiments of the disclosure.
FIG. 3 illustrates a second schematic diagram of a method for information processing according to embodiments of the disclosure.
FIG. 4 illustrates a third schematic diagram of a method for information processing according to embodiments of the disclosure.
FIG. 5 illustrates a fourth schematic diagram of a method for information processing according to embodiments of the disclosure.
FIG. 6 illustrates a schematic diagram of a scenario according to embodiments of the disclosure.
FIG. 7 illustrates a first structural diagram of an apparatus for information processing according to embodiments of the disclosure.
FIG. 8 illustrates a second structural diagram of an apparatus for information processing according to embodiments of the disclosure.
FIG. 9 illustrates a third structural diagram of an apparatus for information processing according to embodiments of the disclosure.
FIG. 10 illustrates a fourth structural diagram of an apparatus for information processing according to embodiments of the disclosure.
FIG. 11 illustrates a structural diagram of a communication device according to embodiments of the disclosure.

### DETAILED DESCRIPTION

Technical solutions of the embodiments of the disclosure will be described clearly and completely below in conjunction with the drawings of the embodiments of the disclosure. Apparently, the described embodiments are some rather than all embodiments of the disclosure. All other embodiments obtained by those skilled in the art based on the embodiments of the disclosure without paying any inventive effort shall fall within the scope of protection of the disclosure.

The term "comprise/include" in the description and claims of the disclosure and any variant thereof is intended to cover non-exclusive inclusion. For example, a process, method, system, product or device containing a series of steps or units is not necessarily limited to those steps or units clearly listed, and can include other steps or units not clearly listed or inherent to the process, method, system, product or device. Moreover, "and/or" is used in the description and claims to represent at least one of objects connected. For example, A and/or B represents three cases, i.e., existence of A alone, existence of B alone and existence of both A and B.

In embodiments of the disclosure, words such as "exemplary" or "for example" are used to give an example, illustration or explanation. In embodiments of the disclosure, any embodiment or design scheme described as "exemplary" or "for example" should be explained as preferred or more advantaged than other embodiments of design schemes. Exactly, the words such as "exemplary" or "for example" are intended to present related concepts in a specific way.

It is to be pointed out that the technologies described in the embodiments of the disclosure are not limited to long term evolution (LTE)/LTE-advanced (LTE-A) systems. The embodiments of the disclosure may also be applicable to other wireless communication systems, such as a code-division multiple access (CDMA) system, a time-division multiple access (TDMA) system, a frequency-division multiple access (FDMA) system, an orthogonal frequency-division multiple access (OFDMA), a single-carrier frequency-division multiple access (SC-FDMA) system and other systems. The terms "system" and "network" in the embodiments of the disclosure are often used exchangeably, and the described technologies may not only be used to the system and radio technologies mentioned above, but may also be used to other systems and radio technologies . However, a radio radio (NR) system is described for exemplification purposes below, and NR terms are used in most of the following description, though these technologies may also be applied to other applications besides NR system applications, such as a 6^{th} generation (6G) communication system.

For better understanding of the embodiments of the disclosure, the following technologies are introduced firstly.

URLLC has two basic properties, namely, high reliability and low delays, for example a block error rate (BLER) at an order of 10⁻⁵ or 10⁻⁶, and an air interface transmission delay of 0.5ms or 1ms. Another extended reality (XR) service refers to an environment combining reality and virtuality and capable of implementing human-machine interaction produced by computer technologies and wearable devices, and is a joint name of many forms such has augmented reality (AR), virtual reality (VR) and mixed reality (MR). The AR, VR and MR also have high reliability and low delays, and also have a high rate in large packets. The XR service not only has requirements on high reliability and low latency, but also has the properties of a high rate, unpredictable jitters, multiple streams and variable packet sizes. For example, the size ratios of an I frame and a P frame are about 3 to 6.

In video compression, each frame is a static image. In actual compression, the capacity of data may be reduced by various algorithms, in which IPB is the most common one:

An I frame is a key frame, which realizes inter-frame compression, and is similar to Audio Video Interleaved (AVI) compression.

A P frame means forward search.

A B frame means bidirectional search.

The P frame and the B frame both realize data compression based on the I frame. An I frame means a key frame, and may be understood that the picture of the frame is completely remained. Decoding can be accomplished with only data of the present frame (because the complete picture is contained). A P frame represents a difference between the current frame and a previous key frame (or P frame); and in decoding, the previously buffered picture is added to the difference defined in the current frame to generate a final picture. (That is to say, the P frame is a difference frame. The P frame does not contain complete picture data, but only data of difference with the picture of the previous frame). A B frame is a bidirectional difference frame. That is to say, the B frame records a difference between the current frame and a previous frame or a next frame, and a difference between the present frame and a following frame. In other words, when decoding a B frame, not only a previously buffered picture needs to be obtained, but also a next picture needs to be decoded; and the final picture is obtained by adding the previous picture and the next picture to data of the current frame. The B frame has a high compression rate, but a central processing unit (CPU) may be tired when performing decoding. Generally, on average, the I frame has a compression rate of 7 (almost the same as JPG), the P frame has a compression rate of 20, and the compression rate of the B frame may reach 50. It can be seen that using B frames can save large space, and the saved space may be used to stored more I frames. As such, under the same code rate, better picture quality can be provided.

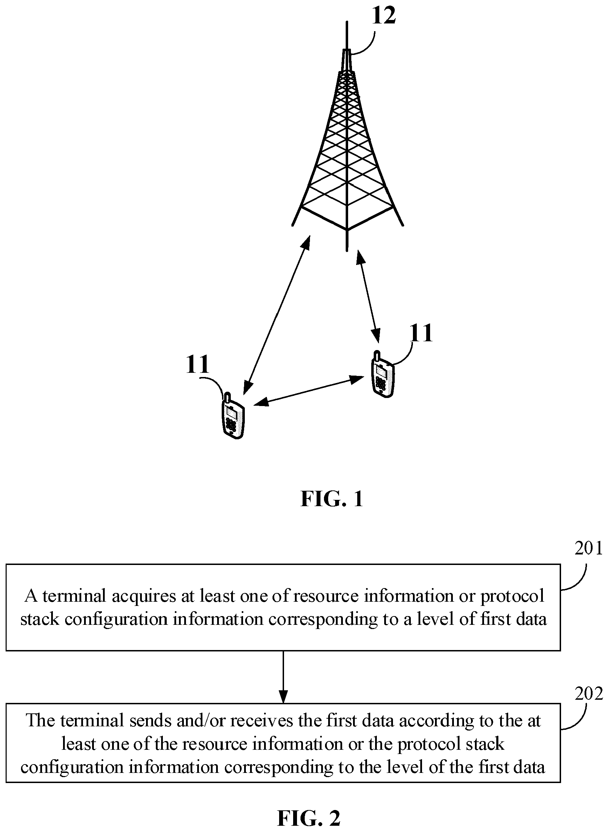

Referring to FIG. 1, which illustrates a block diagram of a wireless communication system applicable to embodiments of the disclosure. The wireless communication system includes a terminal 11, a terminal 12 and a network device 13. A terminal may also be referred to as a terminal device or user equipment (UE). The terminal may be a cellphone, a tablet, or a laptop (or referred to as a notebook), a personal digital assistant (PDA), a palmtop, a netbook, a ultra-mobile personal computer (UMPC), a mobile Internet device (MID), an augmented reality (AR)/virtual reality (VR) device, a robot, a wearable device, vehicle equipment (VUE), pedestrian equipment (PUE), a smart home (household devices with a wireless communication device). It is to be noted that, the particular types of the terminal 11 and the terminal 12 are not limited in the embodiments of the disclosure.

The network device 13 may be a base station or a core network. The base station may be referred to as a NodeB, an evolved NodeB (eNodeB), an access point, a base transceiver station (BTS), a radio base station, a ratio transceiver, a basic service set (BSS), an extended service set (ESS), a NodeB, a gNodeB, a home NodeB, a home gNodeB, a wireless local area network (WLAN) access point, a wireless fidelity (WiFi) node, a transmitting receiving point (TRP), a radio access network node or other appropriate term in the art. As long as achieving the same technical effect, the base station is not limited to a specific technological term. It is to be noted that, in the embodiments of the disclosure, a base station in an NR system is only used as an example, but the particular type of the base station is not limited.

Referring to FIG. 2, which illustrates a method for information processing according to embodiments of the disclosure, the method is applied to a terminal, and particularly includes operations 201 and 202.

At operation 201, the terminal acquires at least one of resource information or protocol stack configuration information corresponding to a level of first data.

At operation 202, the terminal sends and/or receives the first data according to the at least one of the resource information or the protocol stack configuration information corresponding to the level of the first data.

In an implementation of the disclosure, before the terminal acquires the at least one of the resource information or the protocol stack configuration information corresponding to the level of the first data, the method further includes that: the terminal acquires first indication information.

The first indication information indicates 1^{st} to m^{th} levels of data of at least one of following: a first service, a first quality of service (QoS) flow, a first protocol data unit (PDU) session, a first stream (or a service data flow), a first radio bearer (RB), or a first logical channel. The first indication information further indicates resource information and/or protocol stack configuration information corresponding to each of the 1^{st} to m^{th} levels. m is a natural number greater than or equal to 1.

In an implementation of the disclosure, the protocol stack configuration information includes at least one of following: radio bearer configuration information, service data adaptation protocol (SDAP) configuration information, packet data convergence protocol (PDCP) configuration information, radio link control (RLC) configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of second downlink data corresponding to first data, or protocol stack configuration information of third uplink data corresponding to the first data.

In an implementation of the disclosure, before, after or at the same time that the terminal acquires the at least one of the resource information or the protocol stack configuration information corresponding to the level of the first data, the method further includes that: the terminal determines a level of first data. The first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel. 1^{st} to m^{th} levels are configured for the first service, the first QoS flow, the first PDU session, the first stream, or the first logical channel, m being a natural number greater than or equal to 1.

In an implementation of the disclosure, the operation that the terminal determines the level of the first data includes following: the terminal determines the level of the first data according to a frame type of the first data, or the terminal determines the level of the first data according to a frame type parsing capability of a non-access stratum (NAS), an Internet protocol (IP) layer, or a PDCP layer; and/or a higher layer above the PDCP layer of the terminal indicates the level of the first data to an access stratum (AS) of the terminal.

In an implementation of the disclosure, resource information corresponding to the level of the first data includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection.

The HARQ progress information includes at least one of following: a number of HARQ progresses, an HARQ progress ID, whether an HARQ progress supports HARQ feedback, whether an HARQ progress supports retransmission scheduling, and an HARQ codebook type.

In an implementation of the disclosure, the frame type includes any one of: an I frame, a P frame, or a B frame.

Alternatively, in an implementation of the disclosure, the level of data indicates importance of the data. For example, UE1 and UE2 are devices performing voice or video communication services between firefighters or between policemen. A level of data corresponding to ordinary conversation is 2, a level of data about fire warning, disaster information, manhunt information is 1, and so forth; such data have different packet header indicators, IP addresses, or the like, and may be processed differently by the network and the terminal.

Alternatively, in an implementation of the disclosure, the level of data indicates importance of the data. For example, UE1 and UE2 are devices in a factory. A level of data corresponding to a sensor temperature, an operating state and procedure information is 2, a level of data about control information, command information, anomaly alarm or the like is 1, and so forth; such data have different packet header indicators, IP addresses, or the like, and may be processed differently by the network and the terminal.

In an implementation of the disclosure, the operation that the terminal sends the first data according to the resource information corresponding to the level of the first data includes: when the level of the first data corresponds to an I frame, the terminal sends the first data through a combination of multiple beams; or when the level of the first data corresponds to a P frame or a B frame, the terminal sends the first data through a single beam.

In an implementation of the disclosure, the method further includes: the terminal sends at least one of a level of the first data or assistance information to the network device.

The assistance information includes at least one of following: a frame rate, a delay, or a priority of a packet.

In an implementation of the disclosure, granularity of the assistance information is at least one of following:
(1) assistance information corresponding to the first data;
(2) assistance information corresponding to a first PDU session corresponding to the first data;
(3) assistance information corresponding to a first radio bearer corresponding to the first data;
(4) assistance information corresponding to a first logical channel corresponding to the first data;
(5) assistance information corresponding to a quality of service (QoS) flow corresponding to the first data;
(6) assistance information corresponding to a stream corresponding to the first data; or
(7) assistance information corresponding to a service corresponding to the first data.

In an implementation of the disclosure, the method further includes: the terminal or a core network sends first information to the network device. The first information indicates that 1^{st} to b^{th} QoS flows belong to a service, b being a natural number greater than or equal to 1; or the first information indicates that a QoS flow has 1^{st} to q^{th} 5th-generation (5G) QoS identifiers (5QIs), q being a natural number greater than or equal to 1.

In an implementation of the disclosure, the method further includes: the terminal receives second information from the network device. The second information indicates at least one of following:
(1) 1^{st} to b^{th} QoS flows are mapped to one radio bearer;
(2) the 1^{st} to b^{th} QoS flows are mapped to 1^{st} to c^{th} radio bearers; or
(3) a QoS flow having 1^{st} to q^{th} 5QIs is mapped to 1^{st} to d^{th} radio bearers.

c is a natural number greater than or equal to 1, q is a natural number greater than or equal to 1 and d is a natural number greater than or equal to 1.

In an implementation of the disclosure, in a case that the second information indicates that the QoS flow having the 1^{st} to q^{th} 5QIs is mapped to the 1^{st} to d^{th} radio bearers, 1^{st} to q^{th} general packet radio service (GPRS) tunnelling protocol for the user plane (GPT-U) tunnels between a network side and a core network are established through the QoS flow having the 1^{st} to q^{th} 5QIs; or 1^{st} to q^{th} PDU sessions between a terminal and the core network are established through the QoS flow having the 1^{st} to q^{th} 5QIs; or a GPT-U tunnel between a network side and a core network is established through the QoS flow having the 1^{st} to q^{th} 5QIs; or a PDU session between the terminal and the core network is established through the QoS flow having the 1^{st} to q^{th} 5QIs; or a GPT-U tunnel and a PDU session between a network side and a core network, and 1 to e sub-stream PDU sessions in the PDU session are established through the QoS flow having the 1^{st} to q^{th} 5QIs.

Optionally, the PDU session carries an indicator indicating whether the PDU session is a one-level PDU session or a multi-level PDU session.

Optionally, the GTP-U tunnel carries an indicator indicating whether the GTP-U tunnel is a one-level GTP-U tunnel or a multi-level GTP-U tunnel.

For example, multiple sub-streamPDU session IDs, a QoS Flow identifier (QFI), a QoS Profile, a core network tunnel information (CN Tunnel Info), a network slice identifier (Single Network Slice Selection Assistance Information (S-NSSAI) from the Allowed NSSAI), an Aggregate Maximum Bit Rate (AMBR), a PDU Session Type of a sub-stream, User Plane Security Enforcement information, and/or a UE Integrity Protection Maximum Data Rate.

e is a natural number greater than or equal to 1, and may be the same as or different from q and d.

In the embodiments of the disclosure, differentiated processing of different levels of data of a same service enables the data processing to better satisfy the QoS demand of a specific service.

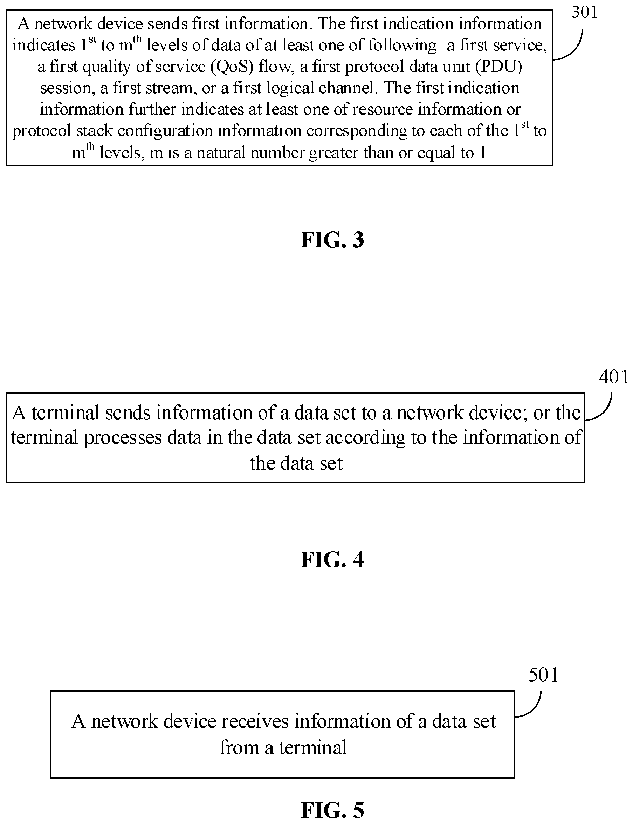

Referring to FIG. 3, which illustrates a method for information processing according to embodiments of the disclosure, the method is applied to a network device, and particularly includes an operation 301

At operation 301, a network device sends first information.

The first indication information indicates 1^{st} to m^{th} levels of data of at least one of following: a first service, a first quality of service (QoS) flow, a first protocol data unit (PDU) session, a first stream, or a first logical channel. The first indication information further indicates resource information and/or protocol stack configuration information corresponding to each of the 1^{st} to m^{th} levels. m is a natural number greater than or equal to 1.

In an implementation of the disclosure, the method further includes: the network device receives first data according to at least one of resource information or protocol stack configuration information corresponding to a level of the first data.

In an implementation of the disclosure, the protocol stack configuration information includes at least one of following: radio bearer configuration information, service data adaptation protocol (SDAP) configuration information, packet data convergence protocol (PDCP) configuration information, radio link control (RLC) configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In an implementation of the disclosure, the first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel. 1^{st} to m^{th} levels are configured in the first service, the first QoS flow, the first PDU session, the first stream, or the first logical channel, m being a natural number greater than or equal to 1.

In an implementation of the disclosure, resource information corresponding to the level of the first data includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection.

The HARQ progress information includes at least one of following: a number of HARQ progresses, an HARQ progress ID, whether an HARQ progress supports HARQ feedback, whether an HARQ progress supports retransmission scheduling, and an HARQ codebook type.

In an implementation of the disclosure, the level indicates a frame type of the first data, and the frame type includes any one of: an I frame, a P frame, or a B frame.

In an implementation of the disclosure, the operation that the network device receives the first data according to the resource information corresponding to the level of the first data includes: when the level of the first data corresponds to an I frame, the network device receives the first data through a combination of multiple beams; or when the level of the first data corresponds to a P frame or a B frame, the network device receives the first data through a single beam.

In an implementation of the disclosure, before, after or at the same time that the network device sends the first indication information, the method further includes: the network device acquires at least one of a level of the first data or assistance information from a core network or a terminal.

The assistance information includes at least one of following: a frame rate, a delay, or a priority of a packet.

In an implementation of the disclosure, granularity of the assistance information is at least one of following:
(1) assistance information corresponding to the first data;
(2) assistance information corresponding to a first PDU session corresponding to the first data;
(3) assistance information corresponding to a first radio bearer corresponding to the first data;
(4) assistance information corresponding to a first logical channel corresponding to the first data;
(5) assistance information corresponding to a QoS flow corresponding to the first data;
(6) assistance information corresponding to a stream corresponding to the first data; or
(7) assistance information corresponding to a service corresponding to the first data.

In an implementation of the disclosure, before, after or at the same time that the network device sends the first indication information, the method further includes: the network device acquires 5th-generation QoS identifier (5QI) information from a core network. The 5QI information includes at least one of following: a frame rate; a delay; a jitter; an error rate; a priority of a packet; far, intermediate and near visual field identifiers; precision information indicating a visual field identifier; or an error concave or correct concave.

In an implementation of the disclosure, granularity of the 5QI information is at least one of following:
(1) 5QI information corresponding to a QoS flow corresponding to the first data;
(2) 5QI information corresponding to a stream corresponding to the first data; or
(3) 5QI information corresponding to the first data.

In an implementation of the disclosure, the method further includes: the network device acquires first information.

The first information indicates that 1^{st} to b^{th} QoS flows belong to a service, b being a natural number greater than or equal to 1; or the first information indicates that a QoS flow has 1^{st} to q^{th} 5th-generation QoS identifiers (5QIs), q being a natural number greater than or equal to 1.

In an implementation of the disclosure, the operation that the network device acquires the first information includes: the network device acquires the first information from at least one of a core network, a terminal, an artificial intelligence (AI) control function, or a network management.

In an implementation of the disclosure, the method further includes: the network device sends second information to a terminal.

The second information indicates at least one of following:
(1) 1^{st} to b^{th} QoS flows are mapped to one radio bearer;
(2) the 1^{st} to b^{th} QoS flows are mapped to 1^{st} to c^{th} radio bearers; or
(3) a QoS flow having 1^{st} to q^{th} 5QIs is mapped to 1^{st} to d^{th} radio bearers.

c is a natural number greater than or equal to 1, q is a natural number greater than or equal to 1 and d is a natural number greater than or equal to 1.

In an implementation of the disclosure, in a case that the second information indicates that the QoS flow having the 1^{st} to q^{th} 5QIs is mapped to the 1^{st} to d^{th} radio bearers, 1^{st} to q^{th} general packet radio service (GPRS) tunnelling protocol for the user plane (GPT-U) tunnels between a network side and a core network are established through the QoS flow having the 1^{st} to q^{th} 5QIs; or 1^{st} to q^{th} PDU sessions between a terminal and the core network are established through the QoS flow having the 1^{st} to q^{th} 5QIs; or a GPT-U tunnel between a network side and a core network is established through the QoS flow having the 1^{st} to q^{th} 5QIs; or a PDU session between the terminal and the core network is established through the QoS flow having the 1^{st} to q^{th} 5QIs.

In the embodiments of the disclosure, differentiated processing of different levels of data of a same service enables the data processing to better satisfy the QoS demand of a specific service.

Referring to FIG. 4 which illustrates a method for information processing according to embodiments of the disclosure. The method is applied to a terminal, and particularly includes an operation 401.

At operation 401, the terminal sends information of a data set to a network device; or the terminal processes data in the data set according to the information of the data set.

The information of the data set is at least one of following cases:
(1) the information of the data set is used for indicating that 1^{st} data to k^{th} data compose the data set, k being a natural number greater than or equal to 1;
(2) the information of the data set is used for indicating that a data is a first packet in the data set;
(3) the information of the data set is used for indicating that a data is a last packet in the data set;
(4) the information of the data set is used for indicating that a data is a middle packet in the data set;
(5) the information of the data set is used for indicating that a data is a first packet in the data set and that there are y packets following the first data packet, y being a natural number greater than or equal to 1;
(6) the information of the data set is used for indicating that a data is a last packet in the data set and that another data set immediately previous to the data set includes n packets, n being a natural number greater than or equal to 1;
(7) the information of the data set is used for indicating that a data is a uth packet in the data set, u being a natural number greater than or equal to 1;
(8) the information of the data set is used for indicating a level of the data set;
(9) the information of the data set is used for indicating a level of each packet in the data set; or
(10) the information of the data set is used for indicating characteristic information of the data set.

The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

In an implementation of the disclosure, in a case that the terminal sends the information of the data set to the network device, the information of the data set is carried by a packet header of data; or the information of the data set is carried by a payload of data; or the information of the data set is carried by control signaling of at least one of: a radio resource control (RRC) layer, a packet data convergence protocol (PDCP) layer, a control signaling radio link control (RLC) layer or a media access control (MAC) layer; or the information of the data set is added to buffer status report (BSR) signaling; or the information of the data set is added to scheduling request (SR) signaling.

In an implementation of the disclosure, in a case that the terminal sends the information of the data set to the network device, multiple data in the data set form a same picture, to assist information scheduling of the network device by using the data set.

In an implementation of the disclosure,, in a case that the terminal sends the information of the data set to the network device, multiple data in the data set are used to accomplish a same task, to assist information scheduling of the network device by using the data set.

In an implementation of the disclosure, in a case that the terminal sends the information of the data set to the network device, the method further includes: the terminal receives at least one of following from the network device: resource configuration or resource scheduling information for the data set.

In an implementation of the disclosure, resource information corresponding to the data set includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection.

The HARQ progress information includes at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

In an implementation of the disclosure, the protocol stack configuration information of the data set includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In an implementation of the disclosure, in a case that the terminal processes the data in the data set according to the information of the data set, the operation that the terminal processes the data in the data set according to the information of the data set includes at least one of following:
(1) the terminal selects a radio resource according to the information of the data set;
(2) the terminal multiplexes the data in the data set in one or more MAC packet data units (PDUs) preferentially;
(3) the terminal sends the data in the data set using multiple parallel HARQ progresses;
(4) the terminal sends the data in the data set using multiple configured grant resources;
(5) the terminal multiplexes retransmission of a data in the data set and new transmission of another piece of data in the data set in one or more MAC packet data units (PDUs) preferentially;
(6) the terminal performs a data recovery operation on 1^{st} to k1^{th} data in the data set together;
(7) the terminal sets and/or starts a discard timer for 1^{st} to k2^{th} data in the data set;
(8) the terminal sends a PDCP status report. A field of a bitmap in the PDCP status report is used for indicating a receiving state of the data set;
(9) the terminal discards 1^{st} to k3^{th} data in the data set in response to that a discard timer corresponding to any of the 1^{st} to the k3^{th} data in the data set expires; or
(10) the terminal delivers one or more RLC service data units (SDUs) corresponding the 1^{st} to k4^{th} data in the data set in response to that an RLC layer receives all of the 1^{st} to the k4^{th} data in the data set from a lower layer.

k1, k2, k3 and k4 are natural numbers greater than or equal to 1.

In the embodiments of the disclosure, differentiated processing of different levels of data of a same service enables the data processing to better satisfy the QoS demand of a specific service.

Referring to FIG. 5 which illustrates a method for information processing. The method is applied to a network device and includes an operation 501.

At operation 501, the network device receives information of a data set from a terminal.

The information of the data set is at least one of following cases:
(1) the information of the data set is used for indicating that the data set is composed of 1^{st} to k^{th} data, k being a natural number greater than or equal to 1;
(2) the information of the data set is used for indicating that a data is a first packet in the data set;
(3) the information of the data set is used for indicating that a data is a last packet in the data set;
(4) the information of the data set is used for indicating that a data is a middle packet in the data set;
(5) the information of the data set is used for indicating that a data is a first packet in the data set and that there are y packets following the first data packet, y being a natural number greater than or equal to 1;
(6) the information of the data set is used for indicating that a data is a last packet in the data set and that another data set immediately previous to the data set includes n packets, n being a natural number greater than or equal to 1;
(7) the information of the data set is used for indicating that a data is a u^{th} packet in the data set, u being a natural number greater than or equal to 1;
(8) the information of the data set is used for indicating a level of the data set;
(9) the information of the data set is used for indicating a level of each packet in the data set; or
(10) the information of the data set is used for indicating characteristic information of the data set.

The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

In an implementation of the disclosure, the information of the data set is carried by a packet header of data; or the information of the data set is carried by a payload of data; or the information of the data set is carried by control signaling of at least one of: a radio resource control (RRC) layer, a packet data convergence protocol (PDCP) layer, a control signaling radio link control (RLC) layer or a media access control (MAC) layer; or the information of the data set is added to buffer status report (BSR) signaling; or the information of the data set is added to scheduling request (SR) signaling.

In an implementation of the disclosure, multiple data in the data set form a same picture, to assist information scheduling of the network device by using the data set; or multiple data in the data set are used to accomplish a same task, to assist information scheduling of the network device by using the data set.

In an implementation of the disclosure, the method further includes: the network device sends at least one of following to the terminal: resource configuration or resource scheduling information for the data set.

In an implementation of the disclosure, resource information corresponding to the data set includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection.

The HARQ progress information includes at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

In an implementation of the disclosure, the protocol stack configuration information of the data set includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In the embodiments of the disclosure, differentiated processing of different levels of data of a same service enables the data processing to better satisfy the QoS demand of a specific service.

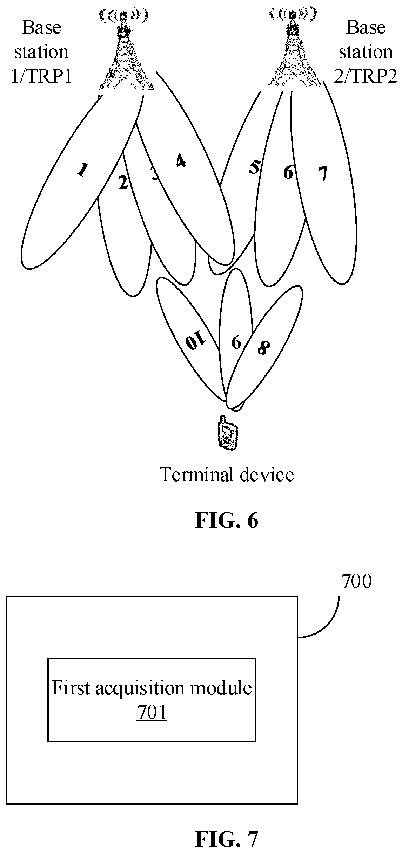

Embodiment I: Enhancement of reliability and latency performance of URLLC on FR2, applicable to the scenario illustrated in FIG. 6.

In the FR2 frequency range, fast fading of radio signals occur frequently, and the signals are very unstable. In order to improve the reliability of an FR2 Physical Downlink Shared Channel (PDSCH)/Physical Uplink Shared Channel (PUSCH)/Physical Downlink Control Channel (PDCCH)/Physical Uplink Control Channel (PUCCH), UE is configured with different numbers of data beams with different bandwidths according to different service characteristics, and each of the beams is bound to a logical channel or a logical channel group (LCG) and/or is bound to a semi-static configuration resource (such as a configured grant (CG), semi-persistent scheduling (SPS)).

In a case where the UE has 3 concurrent services. One is an XR service requiring high reliability, low latency and large data. Another is a URLLC service requiring high reliability, low latency and small data. Yet another is an enhanced mobile broadband (eMBB) service having no strict requirement on reliability and latency.

When configuring information of a logical channel and/or a logical channel group for the eMBB service of UE, the base station may also bind a downlink beam to the logical channel and/or the logical channel group, for example a downlink beam 5, or may bind no beam to the logical channel and/or the logical channel group, which is indicated by the base station using downlink control information (DCI) in dynamic scheduling.

When configuring information of a logical channel and/or a logical channel group for the XR service of UE, the base station may also bind multiple downlink beams to the logical channel and/or the logical channel group, for example a downlink beam 6, a downlink beam 7 and a downlink beam 4.

When configuring information of a logical channel and/or a logical channel group for the URLLC service of UE, the base station may also bind multiple downlink beams to the logical channel and/or the logical channel group, for example a downlink beam 6, a downlink beam 7, a downlink beam 3, a downlink beam 4 and a downlink beam 2.

To prevent service interruption and jitters caused by fast fading of beam signals during service receiving, the base station indicates no particular beam when performing downlink scheduling, but instead sends same content on one or more downlink beams bound to a logical channel and/or logical channel group corresponding to the service, and/or bound to a semi-static configuration resource (for example, a CG, SPS).

As such, the UE may receive data on one or more downlink beams with good signal quality measured by the UE itself, or the UE may receive data on any one or more downlink beams. If necessary, the UE may feed back a hybrid automatic repeat request (HARQ) acknowledgement (ACK) or negative acknowledgement (NACK) on corresponding uplink beams.

Alternatively, to prevent service interruption and jitters caused by fast fading of beam signals during service receiving, the base station indicates no particular beam when performing downlink scheduling, but instead selects an available beam from one or more beams bound to a logical channel and/or logical channel group corresponding to the service, and/or bound to a semi-static configuration resource (for example, a CG, SPS), and sends data on the selected beam. Therefore, the UE may perform data receiving detection on the bound beams, and may preferentially select one or more downlink (DL) beams with good signal quality measured by the UE itself and receive data on the selected beams, or the UE may receive data on any one or more DL beams. If necessary, the UE may feed back HARQ ACK/NACK on corresponding uplink beams.

Alternatively, the base station carries a DL beam use priority pattern in the DCI, and the UE receives data sequentially.

When configuring information of a logical channel and/or a logical channel group for the eMBB service of UE, the base station may also bind a beam to the logical channel and/or the logical channel group, for example an uplink beam 8, or may bind no beam, which is indicated by the base station using downlink control information (DCI) in dynamic scheduling.

When configuring information of a logical channel and/or a logical channel group for the XR service of UE, the base station may also bind multiple beams to the logical channel and/or the logical channel group, for example an uplink beam 8 and an uplink beam 9.

When configuring information of a logical channel and/or a logical channel group for the URLLC service of UE, the base station may also bind multiple beams to the logical channel and/or the logical channel group, for example an uplink beam 8, an uplink beam 9 and an uplink beam 10.

To prevent service interruption and jitters caused by fast fading of beam signals during service receiving, the base station indicates no particular beam when performing uplink scheduling, but the UE sends same content on one or more uplink beams bound to a logical channel and/or logical channel group corresponding to the service, and/or bound to a semi-static configuration resource (for example, a CG, SPS).

The UE may receive data on one or more downlink beams with good DL signal quality measured by the UE itself corresponding to uplink beams, or the UE receives data on any one or more downlink beams. Alternatively, the UE sends an uplink signal on multiple uplink beams, and the base station feeds back signal quality information of the uplink beams to the UE according to an uplink measurement result. The UE sends data on a selected subset or set of one or more beams bound to a logical channel and/or logical channel group corresponding to the service, and/or bound to a semi-static configuration resource (for example, a CG, SPS). The base station is unaware about the specific beam on which the UE sends data; thus blind detection is needed.

Then, the UE receives new data transmission scheduling or retransmission scheduling on one or more DL beams bound to a logical channel and/or logical channel group corresponding to the service, and/or bound to a semi-static configuration resource (for example, a CG, SPS).

In the above downlink and uplink receiving/sending, in order to refrain from interruption or jitter of data, when a beam fails, another one or more beams may be switched to promptly, to perform sending/receiving.

Further, the base station configures multiple groups of beams for the UE in advance, for example uplink beams. A non-access stratum (NAS) or a PDCP layer of the terminal is added with a frame type parsing capability. In a case of a packet corresponding to a key frame (namely, an I frame) in an XR service, a combination of multiple beams are configured for such a packet. In a case of a packet corresponding to a P frame and a B frame, the packet is sent only on a single beam.

The base station firstly acquires a frame type of the XR packet from a core network, or the base station itself has a parsing capability. In a case of a packet corresponding to a key frame (namely, an I frame) in an XR service, a combination of multiple beams are configured for such a packet. In a case of a packet corresponding to a P frame and a B frame, the packet is sent only on a single beam.

Additionally, when a packet of a higher layer may form a picture, the higher layer informs the indication information to a radio access side by inner primitive or by adding an indicator to the header (for example, information of a corresponding packet group, whether the packet is a last packet in the group, and information of an allowed time window in which sending of all packets in the group is completed), and the SDAP/PDCP layer needs to parse the indicator field of the packet. The base station associates these packets to a same beam group, and ensures sending of these packets on the same beam group is completed in a certain time window.

### Embodiment II

Two base stations are configured for UE. One operates in the FR1 frequency range, and the other one operates in the FR2 frequency range. Then two beam sets are configured for the UE. For example, a beam 2 and a beam 3 on the FR1, and a beam 6, a beam 7, a beam 8 and a beam 9 on the FR2. A beam selection rule is issued, for example beam numbers and types (FR1 or FR2) corresponding to different bandwidth levels of services respectively, a threshold corresponding to a channel condition on which a beam is used (downlink is measured by CRI-RS, and uplink is measured by corresponding downlink quality), beam numbers and types corresponding to different reliability levels of services, and beam numbers and types corresponding to different latency/jitter levels of a service.

The AS and the NAS of the UE requests to obtain information such as the latency/jitter, reliability, and a bandwidth requirement of the service, and autonomously selects a number and type of the beams or autonomously selects a beam group based on measured beam channel quality.

For example, a larger number of large-bandwidth beams in FR2 are selected for an XR service requiring high reliability, low latency and large data. Low-frequency FR1 beams are selected to a greatest extent for a URLLC service of small data and an eMBB service having no restrict requirement on reliability and latency. The URLLC service has more beam choices than the eMBB service.

The UE may autonomously select a beam(s) to be used in different situations according to theses preconfigured beam groups and preconfigured rules, and then feeds back the selected rule to the base station through dynamic signaling such as UL MAC signaling or uplink control information (UCI) signaling (it may be sent by an independent PUCCH or MAC signaling, or in a pickup manner of UCI multiplexed with a PUSCH (UCI multiple on PUSCH)).

Referring to FIG. 7, which illustrates an apparatus for information processing according to embodiments of the disclosure, the apparatus is applied to a terminal, and particularly includes a first acquisition module 701 and a transceiving module 702.

The first acquisition module 701 is configured to acquire resource information and/or protocol stack configuration information corresponding to a level of first data.

The transceiving module 702 is configured to send and/or receive the first data through the resource information and/or the protocol stack configuration information corresponding to the level of the first data.

In an implementation of the disclosure, the first acquisition module is further configured to acquire first indication information.

The first indication information indicates 1^{st} to m^{th} levels of data of at least one of following: a first service, a first quality of service (QoS) flow, a first protocol data unit (PDU) session, a first stream, or a first logical channel. The first indication information further indicates resource information and/or protocol stack configuration information corresponding to each of the 1^{st} to m^{th} levels. m is a natural number greater than or equal to 1.

In an implementation of the disclosure, the protocol stack configuration information includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In an implementation of the disclosure, the first acquisition module 901 includes a determination unit.

The determination unit is configured to determine a level of first data. The first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel. 1^{st} to m^{th} levels are configured in the first service, the first QoS flow, the first PDU session, the first stream, or the first logical channel, m being a natural number greater than or equal to 1.

In an implementation of the disclosure, the acquisition unit is further configured to determine the level of the first data according to a frame type of the first data; or determine the level of the first data according to a frame type parsing capability of a non-access stratum (NAS), an Internet protocol (IP) layer, or a PDCP layer; or indicate, through a higher layer above the PDCP layer, the level of the first data to an access stratum (AS) of the terminal.

In an implementation of the disclosure, resource information corresponding to the level of the first data includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection;

The HARQ progress information includes at least one of following: a number of HARQ progresses, an HARQ progress ID, whether an HARQ progress supports HARQ feedback, whether an HARQ progress supports retransmission scheduling, and an HARQ codebook type.

In an implementation of the disclosure, the frame type includes any one of: an I frame, a P frame, or a B frame.

In an implementation of the disclosure, the operation that the terminal sends the first data according to the resource information corresponding to the level of the first data includes: when the level of the first data corresponds to an I frame, the terminal sends the first data through a combination of multiple beams; or when the level of the first data corresponds to a P frame or a B frame, the terminal sends the first data through a single beam.

In an implementation of the disclosure, the method further includes: the terminal sends at least one of a level of the first data or assistance information to the network device.

The assistance information includes at least one of following: a frame rate, a delay, or a priority of a packet.

In an implementation of the disclosure, granularity of the assistance information is at least one of following:
(1) assistance information corresponding to the first data;
(2) assistance information corresponding to a first PDU session corresponding to the first data;
(3) assistance information corresponding to a first radio bearer corresponding to the first data;
(4) assistance information corresponding to a first logical channel corresponding to the first data;
(5) assistance information corresponding to a quality of service (QoS) flow corresponding to the first data;
(6) assistance information corresponding to a stream corresponding to the first data; or
(7) assistance information corresponding to a service corresponding to the first data.

In an implementation of the disclosure, the method further includes: the terminal sends first information to the network device.

The first information indicates that 1^{st} to b^{th} QoS flows belong to a service, b being a natural number greater than or equal to 1; or the first information indicates that a QoS flow has 1^{st} to q^{th} 5th-generation QoS identifiers (5QIs), q being a natural number greater than or equal to 1.

In an implementation of the disclosure, the method further includes: the terminal receives second information from the network device.

The second information indicates at least one of following:
(1) 1^{st} to b^{th} QoS flows are mapped to one radio bearer;
(2) the 1^{st} to b^{th} QoS flows are mapped to 1^{st} to c^{th} radio bearers; or
(3) a QoS flow having 1^{st} to q^{th} 5QIs is mapped to 1^{st} to d^{th} radio bearers.

c is a natural number greater than or equal to 1, q is a natural number greater than or equal to 1 and d is a natural number greater than or equal to 1.

In an implementation of the disclosure, in a case that the second information indicates that the QoS flow having the 1^{st} to q^{th} 5QIs is mapped to the 1^{st} to d^{th} radio bearers, 1^{st} to q^{th} general packet radio service (GPRS) tunnelling protocol for the user plane (GPT-U) tunnels between a network side and a core network are established through the QoS flow having the 1^{st} to q^{th} 5QIs; or 1^{st} to q^{th} PDU sessions between a terminal and the core network are established through the QoS flow having the 1^{st} to q^{th} 5QIs; or a GPT-U tunnel between a network side and a core network is established through the QoS flow having the 1^{st} to q^{th} 5QIs; or a PDU session between the terminal and the core network is established through the QoS flow having the 1^{st} to q^{th} 5QIs.

The apparatus according to the embodiments of the disclosure can implement processes of the method embodiment as illustrated in FIG. 2, and achieve the same technical effect, which will not be described here again to avoid repetition.

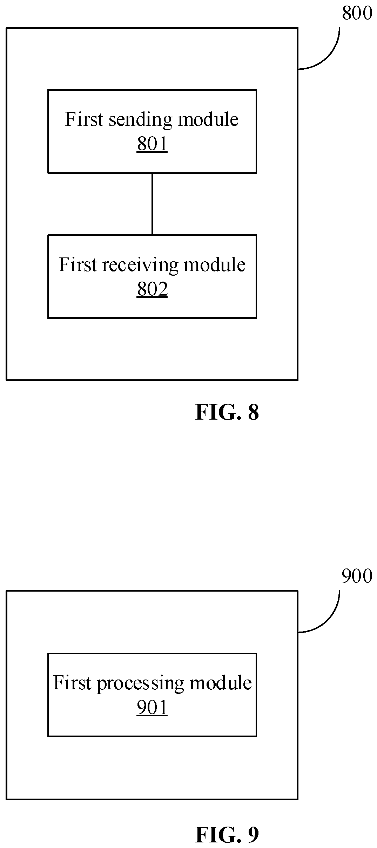

Referring to FIG. 8 which illustrates an apparatus for information processing according to embodiments of the disclosure. The apparatus is applied to a network device, and particularly includes a first sending module 801.

The first sending module 801 is configured to send first indication information.

The first indication information indicates 1^{st} to m^{th} levels of data of at least one of following: a first service, a first quality of service (QoS) flow, a first protocol data unit (PDU) session, a first stream, or a first logical channel. The first indication information further indicates at least one of resource information or protocol stack configuration information corresponding to each of the 1^{st} to m^{th} levels. m is a natural number greater than or equal to 1. In an implementation of the disclosure, the apparatus further includes a first receiving module.

The first receiving module is configured to receive the first data through the at least one of the resource information or the protocol stack configuration information corresponding to the level of the first data.

In an implementation of the disclosure, the protocol stack configuration information includes at least one of following: radio bearer configuration information, service data adaptation protocol (SDAP) configuration information, packet data convergence protocol (PDCP) configuration information, radio link control (RLC) configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In an implementation of the disclosure, the first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel. 1^{st} to m^{th} levels are configured in the first service, the first QoS flow, the first PDU session, the first stream, or the first logical channel, m being a natural number greater than or equal to 1.

In an implementation of the disclosure, resource information corresponding to the level of the first data includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection.

The HARQ progress information includes at least one of following: a number of HARQ progresses, an HARQ progress ID, whether an HARQ progress supports HARQ feedback, whether an HARQ progress supports retransmission scheduling, and an HARQ codebook type.

In an implementation of the disclosure, the level indicates a frame type of the first data, and the frame type includes any one of: an I frame, a P frame, or a B frame.

In an implementation of the disclosure, the operation that the network device receives the first data according to the resource information corresponding to the level of the first data includes: when the level of the first data corresponds to an I frame, the network device receives the first data through a combination of multiple beams; or when the level of the first data corresponds to a P frame or a B frame, the network device receives the first data through a single beam.

In an implementation of the disclosure, the apparatus further includes a second acquisition module. The second acquisition module is configured to acquire at least one of a level of the first data or assistance information from a core network or a terminal.

The assistance information includes at least one of following: a frame rate, a delay, or a priority of a packet.

In an implementation of the disclosure, granularity of the assistance information is at least one of following:
(1) assistance information corresponding to the first data;
(2) assistance information corresponding to a first PDU session corresponding to the first data;
(3) assistance information corresponding to a first radio bearer corresponding to the first data;
(4) assistance information corresponding to a first logical channel corresponding to the first data;
(5) assistance information corresponding to a QoS flow corresponding to the first data;
(6) assistance information corresponding to a stream corresponding to the first data; or
(7) assistance information corresponding to a service corresponding to the first data.

In an implementation of the disclosure, the apparatus further includes a third acquisition module.

The third acquisition module is configured to acquire 5th-generation QoS identifier (5QI) information from a core network. The 5QI information includes at least one of following: a frame rate; a delay; a jitter; an error rate; a priority of a packet; far, intermediate and near visual field identifiers; precision information indicating a visual field identifier; or an error concave or correct concave.

In an implementation of the disclosure, granularity of the 5QI information is at least one of following:
(1) 5QI information corresponding to a QoS flow corresponding to the first data;
(2) 5QI information corresponding to a stream corresponding to the first data; or
(3) 5QI information corresponding to the first data.

In an implementation of the disclosure, the apparatus further includes a fourth acquisition module.

The fourth acquisition module is configured to acquire first information.

The first information indicates that 1^{st} to b^{th} QoS flows belong to a service, b being a natural number greater than or equal to 1; or the first information indicates that a QoS flow has 1^{st} to q^{th} 5th-generation QoS identifiers (5QIs), q being a natural number greater than or equal to 1.

In an implementation of the disclosure, the fourth acquisition module is further configured to acquire the first information from at least one of a core network, a terminal, an artificial intelligence (AI) control function, or a network management.

In an implementation of the disclosure, the apparatus further includes a second sending module.

The second sending module is configured to send second information to a terminal.

The second information indicates at least one of following:
(1) 1^{st} to b^{th} QoS flows are mapped to one radio bearer;
(2) the 1^{st} to b^{th} QoS flows are mapped to 1^{st} to c^{th} radio bearers; or
(3) a QoS flow having 1^{st} to q^{th} 5QIs is mapped to 1^{st} to d^{th} radio bearers.

c is a natural number greater than or equal to 1, q is a natural number greater than or equal to 1 and d is a natural number greater than or equal to 1.

In an implementation of the disclosure, in a case that the second information indicates that the QoS flow having the 1^{st} to q^{th} 5QIs is mapped to the 1^{st} to d^{th} radio bearers, 1^{st} to q^{th} general packet radio service (GPRS) tunnelling protocol for the user plane (GPT-U) tunnels between a network side and a core network are established through the QoS flow having the 1^{st} to q^{th} 5QIs; or 1^{st} to q^{th} PDU sessions between a terminal and the core network are established through the QoS flow having the 1^{st} to q^{th} 5QIs; or a GPT-U tunnel between a network side and a core network is established through the QoS flow having the 1^{st} to q^{th} 5QIs; or a PDU session between the terminal and the core network is established through the QoS flow having the 1^{st} to q^{th} 5QIs.

The apparatus according to the embodiments of the disclosure can implement processes of the method embodiment as illustrated in FIG. 3, and achieve the same technical effect, which will not be described here again to avoid repetition.

Referring to FIG. 9 which illustrates an apparatus for information processing according to embodiments of the disclosure. The apparatus 900 is applied to a terminal, and includes a first processing module 901

The first processing module 901 is configured to perform at least one of following: sending information of a data set to a network device; or processing data in the data set according to the information of the data set.

The information of the data set is at least one of following cases:
(1) the information of the data set is used for indicating that the data set is composed of 1^{st} to k^{th} data, k being a natural number greater than or equal to 1;
(2) the information of the data set is used for indicating that a data is a first packet in the data set;
(3) the information of the data set is used for indicating that a data is a last packet in the data set;
(4) the information of the data set is used for indicating that a data is a middle packet in the data set;
(5) the information of the data set is used for indicating that a data is a first packet in the data set and that there are y packets following the first data packet, y being a natural number greater than or equal to 1;
(6) the information of the data set is used for indicating that a data is a last packet in the data set and that another data set immediately previous to the data set includes n packets, n being a natural number greater than or equal to 1;
(7) the information of the data set is used for indicating that a data is a u^{th} packet in the data set, u being a natural number greater than or equal to 1;
(8) the information of the data set is used for indicating a level of the data set;
(9) the information of the data set is used for indicating a level of each packet in the data set; or
(10) the information of the data set is used for indicating characteristic information of the data set.

The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

In an implementation of the disclosure, in a case where the first processing module 901 sends the information of the data set to the network device, the information of the data set is carried by a packet header of data; or the information of the data set is carried by a payload of data; or the information of the data set is carried by control signaling of at least one of: a radio resource control (RRC) layer, a packet data convergence protocol (PDCP) layer, a control signaling radio link control (RLC) layer or a media access control (MAC) layer; or the information of the data set is added to buffer status report (BSR) signaling; or the information of the data set is added to scheduling request (SR) signaling.

In an implementation of the disclosure, in a case that the terminal sends the information of the data set to the network device, multiple data in the data set form a same picture, to assist information scheduling of the network device by using the data set.

In an implementation of the disclosure, in a case where the terminal sends the information of the data set to the network device, multiple data in the data set are used to accomplish a same task, to assist information scheduling of the network device by using the data set.

In an implementation of the disclosure, in a case that the terminal sends the information of the data set to the network device, the terminal receives at least one of following from the network device: resource configuration or resource scheduling information for the data set.

In an implementation of the disclosure, resource information corresponding to the data set includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection.

The HARQ progress information includes at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

In an implementation of the disclosure, the protocol stack configuration information of the data set includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

In an implementation of the disclosure, in a case that the terminal processes the data in the data set according to the information of the data set, the operation that the terminal processes the data in the data set according to the information of the data set includes at least one of following:
(1) the terminal selects a radio resource according to the information of the data set;
(2) the terminal multiplexes the data in the data set in one or more MAC packet data units (PDUs) preferentially;
(3) the terminal sends the data in the data set using multiple parallel HARQ progresses;
(4) the terminal sends the data in the data set using multiple configured grant resources;
(5) the terminal multiplexes retransmission of a data in the data set and new transmission of another piece of data in the data set in one or more MAC packet data units (PDUs) preferentially;
(6) the terminal performs a data recovery operation on 1^{st} to k1^{th} data in the data set together;
(7) the terminal sets and/or starts a discard timer for 1^{st} to k2^{th} data in the data set;
(8) a field of a bitmap in the PDCP status report is used for indicating a receiving state of the data set;
(9) the terminal discards 1^{st} to k3^{th} data in the data set in response to that a discard timer corresponding to any of the 1^{st} to the k3^{th} data in the data set expires; or
(10) the terminal delivers one or more RLC service data units (SDUs) corresponding the 1^{st} to k4^{th} data in the data set in response to that an RLC layer receives all of the 1^{st} to the k4^{th} data in the data set from a lower layer.

k1, k2, k3 and k4 are natural numbers greater than or equal to 1.

The apparatus according to the embodiments of the disclosure can implement processes of the method embodiment as illustrated in FIG. 4, and achieve the same technical effect, which will not be described here again to avoid repetition.

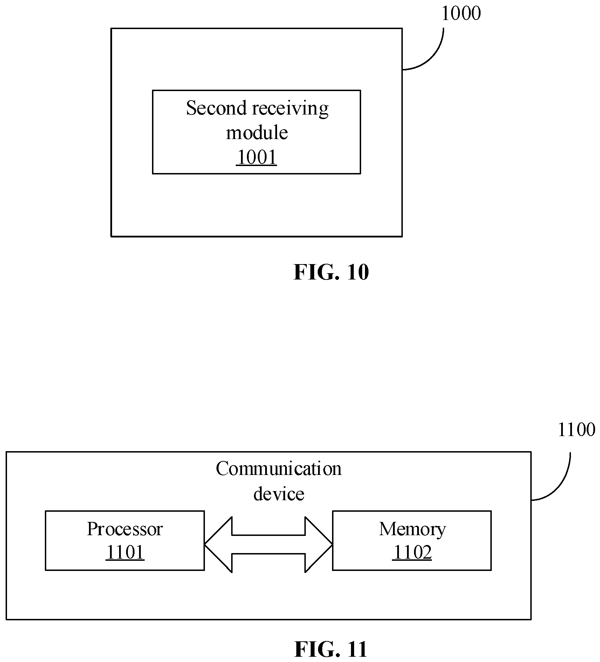

Referring to FIG. 10 which illustrates an apparatus for information processing according to embodiments of the disclosure, the apparatus 1000 is applied to a network device, and includes a second receiving module 1001.

The second receiving module 1001 is configured to receive information of a data set from a terminal.

The information of the data set is at least one of following cases:
(1) the information of the data set is used for indicating that the data set is composed of 1^{st} to k^{th} data, k being a natural number greater than or equal to 1;
(2) the information of the data set is used for indicating that a data is a first packet in the data set;
(3) the information of the data set is used for indicating that a data is a last packet in the data set;
(4) the information of the data set is used for indicating that a data is a middle packet in the data set;
(5) the information of the data set is used for indicating that a data is a first packet in the data set and that there are y packets following the first data packet, y being a natural number greater than or equal to 1;
(6) the information of the data set is used for indicating that a data is a last packet in the data set and that another data set immediately previous to the data set includes n packets, n being a natural number greater than or equal to 1;
(7) the information of the data set is used for indicating that a data is a u^{th} packet in the data set, u being a natural number greater than or equal to 1;
(8) the information of the data set is used for indicating a level of the data set;
(9) the information of the data set is used for indicating a level of each packet in the data set; or
(10) the information of the data set is used for indicating characteristic information of the data set.

The characteristic information includes at least one of following: a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

In an implementation of the disclosure, the information of the data set is carried by a packet header of data; or the information of the data set is carried by a payload of data; or the information of the data set is carried by control signaling of at least one of: a radio resource control (RRC) layer, a packet data convergence protocol (PDCP) layer, a control signaling radio link control (RLC) layer or a media access control (MAC) layer; or the information of the data set is added to buffer status report (BSR) signaling; or the information of the data set is added to scheduling request (SR) signaling.

In an implementation of the disclosure, multiple data in the data set form a same picture, to assist information scheduling of the network device by using the data set; or multiple data in the data set are used to accomplish a same task, to assist information scheduling of the network device by using the data set.

In an implementation of the disclosure, the apparatus further include a third sending module.

The third sending module is configured to send at least one of following to the terminal: resource configuration or resource scheduling information for the data set.

In an implementation of the disclosure, resource information corresponding to the data set includes one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, or hybrid automatic repeat request (HARQ) progress information.

The HARQ progress information includes at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

In an implementation of the disclosure, the protocol stack configuration information of the data set includes at least one of following: radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

The apparatus according to the embodiments of the disclosure can implement processes of the method embodiment as illustrated in FIG. 5, and achieve the same technical effect, which will not be described here again to avoid repetition.

As illustrated in FIG. 11, embodiments of the disclosure further provide a communication device 1100. The communication device 1100 include a processor 1101, a memory 1102, and a program or instructions stored in the memory 1102 and can be run on the processor 1101. The program or instructions, when executed by the processor 1101, implement processes of the method embodiment of FIG. 2, FIG. 3, FIG. 4 or FIG. 5 above, and can achieve the same technical effect, which is not described here again to avoid repetition.

Embodiments of the disclosure further provide a readable storage medium stored with a program or instructions that, when executed by a processor, implement processes of the method embodiment of FIG. 2, FIG. 3, FIG. 4 or FIG. 5 above, and can achieve the same technical effect, which is not described here again to avoid repetition.

The processor is a processor in a terminal in the above embodiments. The readable storage medium includes a computer-readable storage medium, such as a read-only memory (ROM), a random access memory (RAM), a magnetic disc, or a compact disc (CD).

The steps or the method or algorithm described in conjunction with the disclosure may be implemented by way of hardware, and may also be implemented by a processor executing software instructions. The software instructions may be composed by corresponding software modules. The software modules may be stored in a random access memory (RAM), a flash drive, a read-only memory (ROM), an electrically programmable ROM (EPROM), an electrically erasable EPROM (EEPROM), a register, a hard drive, mobile hard disk drive, a read-only compact disc or any other form of storage medium familiar to those skilled in the art. An exemplary storage medium is coupled to the processor to enable the processor to read information from the storage medium and write information into the storage medium. Of course, the storage medium may also be a component of the processor. The processor and the storage medium may be carried in an application specific integrated circuit (ASIC). Additionally, the ASIC may be carried in a core network interface device. Of course, the processor and the storage medium may also exist in the core network interface device as discrete components.

Those skilled in the art may realize that, the functions described in one or more examples of the disclosure above may be realized by hardware, software, firmware or any combination thereof. When implemented by software, these functions may be stored in a computer-readable storage medium or transmitted as one or more instructions or codes on the computer-readable storage medium. The computer-readable storage medium includes a computer-readable storage medium and communication medium. The communication medium includes any medium capable of transmitting a computer program from one place to another. The storage medium may be any available medium accessible by a general or specific computer.

In the above detailed description, the purpose, technical solution and beneficial effect of the disclosure are described in more detail. It should be understood that the above are merely detailed description of the disclosure and are not used to limit the scope of protection of the disclosure. Any modification, equivalent replacement, improvements, etc. made based on the technical solution of the disclosure shall fall within the scope of protection of the disclosure.

Those skilled in the art should understand that the embodiments of the disclosure may be provided as a method, a system, or a computer program product. Therefore, the embodiments of the disclosure may be in form of complete hardware embodiments, complete software embodiments or embodiments combining software and hardware aspects. Moreover, the embodiments of the disclosure may be in form of a computer program product embodied on one or more computer-readable storage medium (including but not limited to a hard disk memory, a CD-ROM, an optical memory, etc.) containing program codes usable by a computer.

The embodiments of the disclosure are described according to the flowcharts and/or block diagrams of the method, device (system) and computer program product according to the embodiments of the disclosure. It should be understood that each flow and/or block in the flowcharts and/or block diagrams or combinations of flows and/or blocks in the flowcharts and/or block diagrams may be realized by computer program instructions. These computer program instructions may be provided to a general-purpose computer, a special-purpose computer, an embedded processor or a processor of other programmable processing devices to produce a machine, so that the instructions executed by the computer or the processor of the other programmable processing devices produce an apparatus for realizing specific functions in one or more flows of the flowcharts and/or one or more blocks in the block diagrams.

These computer program instructions may also be stored in a computer-readable memory that can guide a computer or other programmable data processing devices to operate in a specific manner, so that the instructions stored in the computer-readable memory produce a product including an instruction apparatus. The instruction apparatus realizes specific functions in one or more flows of the flowcharts and/or one or more blocks in the block diagrams.

These computer program instructions may also be loaded to a computer or other programmable data processing devices, to enable the computer or the other programmable data processing devices to perform a series of operations/steps to produce the processing implemented by the processor, so that the instructions executed by the computer or the other programmable processing devices produce stops for realizing specific functions in one or more flows of the flowcharts and/or one or more blocks in the block diagrams.

Apparently, those skilled in the art may make various changes and variations to the embodiments of the disclosure without departing from the spirit and scope of the disclosure. As such, if the changes and variations of the embodiments of the disclosure are within the claims of the disclosure and an equivalent technical range thereof, the disclosure is intended to cover the changes and variations as well.

## Claims

1. A method for information processing, comprising at least one of:
sending, by a terminal, information of a data set to a network device; or
processing, by the terminal, data in the data set according to the information of the data set;
wherein the information of the data set is at least one of following cases:
the information of the data set is used for indicating that the data set is composed of 1^{st} to k^{th} data, k being a natural number greater than or equal to 1;
the information of the data set is used for indicating that a data is a first packet in the data set;
the information of the data set is used for indicating that a data is a last packet in the data set;
the information of the data set is used for indicating that a data is a middle packet in the data set;
the information of the data set is used for indicating that a data is a first packet in the data set and that there are r packets following the first packet, r being a natural number greater than or equal to 1;
the information of the data set is used for indicating that a data is a last packet in the data set and that another data set previous to the data set comprises n packets, n being a natural number greater than or equal to 1;
the information of the data set is used for indicating that a data is a u^{th} packet in the data set, u being a natural number greater than or equal to 1;
the information of the data set is used for indicating a level of the data set;
the information of the data set is used for indicating a level of each packet in the data set; or
the information of the data set is used for indicating characteristic information of the data set;
wherein the characteristic information comprises at least one of following:
a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

2. The method of claim 1, wherein in a case of sending, by the terminal, the information of the data set to the network device,
the information of the data set is carried by a packet header of data; or
the information of the data set is carried by a payload of data; or
the information of the data set is carried by control signaling of at least one of: a radio resource control (RRC) layer, a packet data convergence protocol (PDCP) layer, a control signaling radio link control (RLC) layer or a media access control (MAC) layer; or
the information of the data set is added to buffer status report (BSR) signaling; or
the information of the data set is added to scheduling request (SR) signaling.

3. The method of claim 1, wherein in a case of sending, by the terminal, the information of the data set to the network device,
a plurality of data in the data set form a same picture, to assist information scheduling of the network device by using the data set.

4. The method of claim 1, wherein in a case of sending, by the terminal, the information of the data set to the network device,
a plurality of data in the data set are used to accomplish a same task, to assist information scheduling of the network device by using the data set.

5. The method of claim 1, wherein in a case of sending, by the terminal, the information of the data set to the network device, the method further comprises:
receiving, by the terminal from the network device, at least one of resource configuration or resource scheduling information for the data set.

6. The method of claim 1, wherein resource information corresponding to the data set comprises one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection;
wherein the HARQ progress information comprises at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

7. The method of claim 1, wherein protocol stack configuration information of the data set comprises at least one of following:
radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

8. The method of claim 1, wherein in a case of processing, by the terminal, the data in the data set according to the information of the data set, processing, by the terminal, the data in the data set according to the information of the data set comprises at least one of following:
selecting, by the terminal, a radio resource according to the information of the data set;
multiplexing, by the terminal, the data in the data set in one or more MAC packet data units (PDUs) preferentially;
sending, by the terminal, the data in the data set using a plurality of parallel HARQ progresses;
sending, by the terminal, the data in the data set using a plurality of configured grant resources;
multiplexing, by the terminal, retransmission of a data in the data set and new transmission of another piece of data in the data set in one or more MAC packet data units (PDUs) preferentially;
performing, by the terminal, a data recovery operation on 1^{st} to k1^{th} data in the data set together;
setting and/or starting, by the terminal, a discard timer for 1^{st} to k2^{th} data in the data set;
sending, by the terminal, a PDCP status report, wherein a domain of a bitmap in the PDCP status report is used for indicating a receiving state of the data set;
discarding, by the terminal, 1^{st} to k3^{th} data in the data set in response to that a discard timer corresponding to any of the 1^{st} to the k3^{th} data in the data set expires; or
delivering, by the terminal, one or more RLC service data units (SDUs) corresponding 1^{st} to k4^{th} data in the data set in response to that an RLC layer receives all of the 1^{st} to k4^{th} data in the data set from a lower layer;
wherein k1, k2, k3 and k4 are natural numbers greater than or equal to 1.

9. A method for information processing, comprising:
receiving, by a network device, information of a data set from a terminal;
wherein the information of the data set is at least one of following cases:
the information of the data set is used for indicating that the data set is composed of 1^{st} to k^{th} data, k being a natural number greater than or equal to 1;
the information of the data set is used for indicating that a data is a first packet in the data set;
the information of the data set is used for indicating that a data is a last packet in the data set;
the information of the data set is used for indicating that a data is a middle packet in the data set;
the information of the data set is used for indicating that a data is a first packet in the data set and that there are r packets following the first packet, r being a natural number greater than or equal to 1;
the information of the data set is used for indicating that a data is a last packet in the data set and that another data set immediately previous to the data set comprises n packets, n being a natural number greater than or equal to 1;
the information of the data set is used for indicating that a data is a u^{th} packet in the data set, u being a natural number greater than or equal to 1;
the information of the data set is used for indicating a level of the data set;
the information of the data set is used for indicating a level of each packet in the data set; or
the information of the data set is used for indicating characteristic information of the data set;
wherein the characteristic information comprises at least one of following:
a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

10. The method of claim 9, wherein:
the information of the data set is carried by a packet header of data; or
the information of the data set is carried by a payload of data; or
the information of the data set is carried by control signaling of at least one of: a radio resource control (RRC) layer, a packet data convergence protocol (PDCP) layer, a control signaling radio link control (RLC) layer or a media access control (MAC) layer; or
the information of the data set is added to buffer status report (BSR) signaling; or
the information of the data set is added to scheduling request (SR) signaling.

11. The method of claim 9, wherein:
a plurality of data in the data set form a same picture, to assist information scheduling of the network device by using the data set; or
a plurality of data in the data set are used to accomplish a same task, to assist information scheduling of the network device by using the data set.

12. The method of claim 9, further comprising:
sending, by the network device to the terminal, at least one of following: resource configuration or resource scheduling information for the data set.

13. The method of claim 9, wherein:
resource information corresponding to the data set comprises one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection;
wherein the HARQ progress information comprises at least one of following: a number of HARQ progresses, an HARQ progress ID, an HARQ progress bitmap indicator corresponding to a data in the data set, whether HARQ feedback is supported, whether an HARQ progress supports retransmission scheduling, or HARQ codebook information shared by data in the data set.

14. The method of claim 9, wherein protocol stack configuration information of the data set comprises at least one of following:
radio bearer configuration information, service data adaptation protocol (SDAP) configuration information, packet data convergence protocol (PDCP) configuration information, RLC configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

15. A method for information processing, comprising:
acquiring, by a terminal, at least one of resource information or protocol stack configuration information corresponding to a level of first data; and
sending and/or receiving, by the terminal, the first data according to the at least one of the resource information or the protocol stack configuration information corresponding to the level of the first data.

16. The method of claim 15, wherein before acquiring, by the terminal, the at least one of the resource information or the protocol stack configuration information corresponding to the level of the first data, the method further comprises:
acquiring, by the terminal, first indication information;
wherein the first indication information indicates 1^{st} to m^{th} levels of data of at least one of following: a first service, a first quality of service (QoS) flow, a first protocol data unit (PDU) session, a first stream, or a first logical channel; and the first indication information further indicates at least one of resource information or protocol stack configuration information for each of the 1^{st} to m^{th} levels; where m is a natural number greater than or equal to 1.

17. The method of claim 15, wherein:
the protocol stack configuration information comprises at least one of following:
radio bearer configuration information, service data adaptation protocol (SDAP) configuration information, packet data convergence protocol (PDCP) configuration information, radio link control (RLC) configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of second downlink data corresponding to first data, or protocol stack configuration information of third uplink data corresponding to the first data.

18. The method of claim 15, wherein before, after or at the same time of acquiring, by the terminal, the at least one of the resource information or the protocol stack configuration information corresponding to the level of the first data, the method further comprises:
determining, by the terminal, a level of first data, wherein the first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel;
wherein 1^{st} to m^{th} levels are configured for the first service, the first QoS flow, the first PDU session, the first stream, or the first logical channel, m being a natural number greater than or equal to 1.

19. The method of claim 15, wherein determining, by the terminal, the level of the first data comprises:
determining, by the terminal, the level of the first data according to a frame type of the first data; or
determining, by the terminal, the level of the first data according to a frame type parsing capability of a non-access stratum (NAS), an Internet protocol (IP) layer, or a PDCP layer; or
indicating the level of the first data by a high layer above the PDCP layer of the terminal to an access stratum (AS) of the terminal.

20. The method of claim 15, wherein resource information corresponding to the level of the first data comprises one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection;
wherein the HARQ progress information comprises at least one of following: a number of HARQ progresses, an HARQ progress ID, whether an HARQ progress supports HARQ feedback, whether an HARQ progress supports retransmission scheduling, and an HARQ codebook type.

21. The method of claim 19, wherein the frame type comprises any one of: an I frame, a P frame, or a B frame.

22. The method of claim 21, wherein sending, by the terminal, the first data according to the resource information corresponding to the level of the first data comprises:
when the level of the first data corresponds to an I frame, sending, by the terminal, the first data through a combination of a plurality of beams; or
when the level of the first data corresponds to a P frame or a B frame, sending, by the terminal, the first data through a single beam.

23. The method of claim 15, further comprising:
sending, by the terminal to the network device, at least one of a level of the first data or assistance information;
wherein the assistance information comprises at least one of following: a frame rate, a delay, or a priority of a packet; and/or
granularity of the assistance information is at least one of following:
assistance information corresponding to the first data;
assistance information corresponding to a first PDU session corresponding to the first data;
assistance information corresponding to a first radio bearer corresponding to the first data;
assistance information corresponding to a first logical channel corresponding to the first data;
assistance information corresponding to a quality of service (QoS) flow corresponding to the first data;
assistance information corresponding to a stream corresponding to the first data; or
assistance information corresponding to a service corresponding to the first data.

24. The method of claim 15, further comprising:
sending, by the terminal, first information to the network device;
wherein the first information indicates that 1^{st} to b^{th} QoS flows belong to a service, b being a natural number greater than or equal to 1; or the first information indicates that a QoS flow has 1^{st} to q^{th} 5th-generation QoS identifiers (5QIs), q being a natural number greater than or equal to 1.

25. The method of claim 15, further comprising:
receiving, by the terminal, second information from the network device; wherein the second information indicates at least one of following:
1^{st} to b^{th} QoS flows are mapped to one radio bearer;
the 1^{st} to b^{th} QoS flows are mapped to 1^{st} to c^{th} radio bearers; or
a QoS flow having 1^{st} to q^{th} 5QIs is mapped to 1^{st} to d^{th} radio bearers;
where b, c, q and d are all natural numbers greater than or equal to 1.

26. The method of claim 25, in a case that the second information indicates that the QoS flow having the 1^{st} to q^{th} 5QIs is mapped to the 1^{st} to d^{th} radio bearers,
establishing, through the QoS flow having the 1^{st} to q^{th} 5QIs, 1^{st} to q^{th} general packet radio service (GPRS) tunnelling protocol for user plane (GTP-U) tunnels between a network side and a core network; or
establishing, through the QoS flow having the 1st to qth 5QIs, a 1st to qth PDU sessions between a terminal and the core network; or
establishing, through the QoS flow having the 1st to qth 5QIs, a GTP-U tunnel between the network side and the core network; or
establishing, through the QoS flow having the 1^{st} to q^{th} 5QIs, a PDU session between the terminal and the core network.

27. A method for information processing, comprising:
sending, by a network device, first information;
wherein the first indication information indicates 1^{st} to m^{th} levels of data of at least one of following: a first service, a first quality of service (QoS) flow, a first protocol data unit (PDU) session, a first stream, or a first logical channel; and the first indication information further indicates at least one of resource information or protocol stack configuration information for each of the 1^{st} to m^{th} levels; where m is a natural number greater than or equal to 1.

28. The method of claim 27, further comprising:
receiving and/or sending, by the network device, first data according to at least one of resource information or protocol stack configuration information corresponding to a level of the first data.

29. The method of claim 27, wherein protocol stack configuration information comprises at least one of following:
radio bearer configuration information, service data adaptation protocol (SDAP) configuration information, packet data convergence protocol (PDCP) configuration information, radio link control (RLC) configuration information, MAC configuration information, physical layer configuration information, adaptation layer configuration information, logical channel configuration information, configured grant configuration information, discontinuous reception (DRX) configuration information, semi-persistent scheduling (SPS) configuration information, random access configuration information, SR configuration information, BSR configuration information, protocol stack configuration information of downlink second data corresponding to first data, or protocol stack configuration information of uplink third data corresponding to the first data.

30. The method of claim 28, wherein:
the first data is at least one of following cases: the first data belongs to a first service, the first data belongs to a first QoS flow, the first data corresponds to a first PDU session, the first data belongs to a first stream, the first data corresponds to a first radio bearer, or the first data corresponds to a first logical channel;
wherein 1^{st} to m^{th} levels are configured in the first service, the first QoS flow, the first PDU session, the first stream, or the first logical channel, m being a natural number greater than or equal to 1.

31. The method of claim 28, wherein resource information corresponding to the level of the first data comprises one or more of following: beam information, configured grant information, a modulation and coding scheme (MSC) value, uplink grant information, bandwidth part (BWP) information, a duration of a physical uplink control channel (PUCCH), a subcarrier spacing, resource information of a PUCCH sending an SR, resource information of a PUCCH sending a channel state information reference signal (CSI-RS), information of a resource for receiving retransmission scheduling, a number of gaps of and a resource start position of slots in which data is sent continuously, hybrid automatic repeat request (HARQ) progress information, whether to start encryption, an encryption level, whether to start integrity protection, or whether to use complete integrity protection or partial integrity protection;
wherein the HARQ progress information comprises at least one of following: a number of HARQ progresses, an HARQ progress ID, whether an HARQ progress supports HARQ feedback, whether an HARQ progress supports retransmission scheduling, and an HARQ codebook type.

32. The method of claim 28, wherein the level indicates a frame type of the first data, and the frame type comprises any one of: an I frame, a P frame, or a B frame.

33. The method of claim 32, wherein receiving, by the network device, the first data according to the at least one of the resource information or the protocol stack configuration information corresponding to the level of the first data comprises:
when the level of the first data corresponds to an I frame, receiving, by the network device, the first data through a combination of a plurality of beams; or
when the level of the first data corresponds to a P frame or a B frame, receiving, by the network device, the first data through a single beam.

34. The method of claim 28, before, after or at the same time of sending, by the network device, the first indication information, the method further comprises:
acquiring, by the network device, at least one of a level of the first data or assistance information from a core network or a terminal;
wherein the assistance information comprises at least one of following: a frame rate, a delay, or a priority of a packet; and/or
granularity of the assistance information is at least one of following:
assistance information corresponding to the first data;
assistance information corresponding to a first PDU session corresponding to the first data;
assistance information corresponding to a first radio bearer corresponding to the first data;
assistance information corresponding to a first logical channel corresponding to the first data;
assistance information corresponding to a QoS flow corresponding to the first data;
assistance information corresponding to a stream corresponding to the first data; or
assistance information corresponding to a service corresponding to the first data.

35. The method of claim 28, before, after or at the same time of sending, by the network device, the first indication information, the method further comprises:
acquiring, by the network device, 5th-generation QoS identifier (5QI) information from a core network, wherein the 5QI information comprises at least one of following: a frame rate; a delay; a jitter; an error rate; a priority of a packet; far, intermediate and near visual field identifiers; precision information indicating a visual field identifier; or an error concave or correct concave; and/or
granularity of the 5QI information is at least one of following:
5QI information corresponding to a QoS flow corresponding to the first data;
5QI information corresponding to a stream corresponding to the first data; or
5QI information corresponding to the first data.

36. The method of claim 27, further comprising:
acquiring, by the network device, first information;
wherein the first information indicates that 1^{st} to b^{th} QoS flows belong to a service, b being a natural number greater than or equal to 1; or
the first information indicates that a QoS flow has a 1^{st} to a q^{th} 5th-generation QoS identifiers (5QIs), q being a natural number greater than or equal to 1.

37. The method of claim 36, wherein acquiring, by the network device, the first information comprises:
acquiring, by the network device, the first information from at least one of a core network, a terminal, an artificial intelligence (AI) control function, or a network management.

38. The method of claim 27, further comprising:
sending, by the network device, second information to a terminal;
wherein the second information indicates at least one of following:
1^{st} to b^{th} QoS flows are mapped to one radio bearer;
the 1^{st} to b^{th} QoS flows are mapped to 1^{st} to c^{th} radio bearers; or
a QoS flow having 1^{st} to q^{th} 5QIs is mapped to 1^{st} to d^{th} radio bearers;
where c is a natural number greater than or equal to 1, q is a natural number greater than or equal to 1 and d is a natural number greater than or equal to 1.

39. The method of claim 38, in a case that the second information indicates that the QoS flow having the 1^{st} to q^{th} 5QIs is mapped to the 1^{st} to d^{th} radio bearers,
establishing, through the QoS flow having the 1^{st} to q^{th} 5QIs, 1^{st} to q^{th} general packet radio service (GPRS) tunnelling protocol for the user plane (GPT-U) tunnels between a network side and a core network; or
establishing, through the QoS flow having the 1^{st} to q^{th} 5QIs, 1^{st} to q^{th} PDU sessions between a terminal and the core network; or
establishing, through the QoS flow having the 1^{st} to q^{th} 5QIs, a GTP-U tunnel between the network side and the core network; or
establishing, through the QoS flow having the 1^{st} to q^{th} 5QIs, a PDU session between the terminal and the core network.

40. An apparatus for information processing, applied to a terminal and comprising:
a first processing module, configured to perform at least one of following: sending information of a data set to a network device; or processing data in the data set according to the information of the data set;
wherein the information of the data set is at least one of following cases:
the information of the data set is used for indicating that the data set is composed of 1^{st} to k^{th} data, k being a natural number greater than or equal to 1;
the information of the data set is used for indicating that a data is a first packet in the data set;
the information of the data set is used for indicating that a data is a last packet in the data set;
the information of the data set is used for indicating that a data is a middle packet in the data set;
the information of the data set is used for indicating that a data is a first packet in the data set and that there are y packets following the first packet, y being a natural number greater than or equal to 1;
the information of the data set is used for indicating that a data is a last packet in the data set and that another data set immediately previous to the data set comprises n packets, n being a natural number greater than or equal to 1;
the information of the data set is used for indicating that a data is a u^{th} packet in the data set, u being a natural number greater than or equal to 1;
the information of the data set is used for indicating a level of the data set;
the information of the data set is used for indicating a level of each packet in the data set; or
the information of the data set is used for indicating characteristic information of the data set;
wherein the characteristic information comprises at least one of following:
a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

41. An apparatus for information processing, applied to a network device and comprising:
a second receiving module, configured to receive information of a data set from a terminal;
the information of the data set is used for indicating that the data set is composed of 1^{st} to k^{th} data, k being a natural number greater than or equal to 1;
the information of the data set is used for indicating that a data is a first packet in the data set;
the information of the data set is used for indicating that a data is a last packet in the data set;
the information of the data set is used for indicating that a data is a middle packet in the data set;
the information of the data set is used for indicating that a data is a first packet in the data set and that there are y packets following the first data packet, y being a natural number greater than or equal to 1;
the information of the data set is used for indicating that a data is a last packet in the data set and that another data set immediately previous to the data set comprises n packets, n being a natural number greater than or equal to 1;
the information of the data set is used for indicating that a data is a u^{th} packet in the data set, u being a natural number greater than or equal to 1;
the information of the data set is used for indicating a level of the data set;
the information of the data set is used for indicating a level of each packet in the data set; or
the information of the data set is used for indicating characteristic information of the data set;
wherein the characteristic information comprises at least one of following:
a multi-packet based delay; a multi-packet based jitter; a multi-packet based error rate; a multi-packet based temporal correspondence relationship between uplink and downlink packets; multi-packet based far, intermediate and near visual field identifiers; a multi-packet based precision information indicating a visual field identifier; or a multi-packet based error concave or correct concave.

42. An apparatus for information processing, applied to a terminal and comprising:
a first acquisition module, configured to acquire at least one of resource information or protocol stack configuration information corresponding to a level of first data; and
a transceiving module, configured to send and/or receive the first data through the at least one of the resource information or the protocol stack configuration information corresponding to the level of the first data.

43. An apparatus for information processing, applied to a network device and comprising:
a first sending module, configured to send first indication information;
wherein the first indication information indicates 1^{st} to m^{th} levels of data of at least one of following: a first service, a first quality of service (QoS) flow, a first protocol data unit (PDU) session, a first stream, or a first logical channel; and the first indication information indicates at least one of resource information or protocol stack configuration information corresponding to each of the 1^{st} to m^{th} levels; where m is a natural number greater than or equal to 1.

44. A communication device, comprising a processor, a memory, and a program that is stored in the memory and is capable of being run on the processor, wherein the program implements, when executed by the processor, the steps of the method of any one of claims 1 to 39.

45. A readable storage medium stored with a program that, when executed by a processor, implements the steps of the method of any one of claims 1 to 39.
